# EUROPÄISCHE PATENTSCHRIFT

(11) **EP 3 894 255 B1**
(45) Veröffentlichungstag und Bekanntmachung des Hinweises auf die Patenterteilung: **29.06.2022**
(21) Anmeldenummer: 19813763.0
(22) Anmeldetag: 29.11.2019
(51) Int. Cl.: B60K 37/06, G06F 3/0488

(54) **BEDIENSYSTEM FÜR EIN FAHRZEUG**
OPERATING SYSTEM FOR A VEHICLE
SYSTÈME DE COMMANDE POUR UN VÉHICULE

(30) Priorität: 13.12.2018 DE 102018221704
(43) Veröffentlichungstag der Anmeldung: 20.10.2021
(73) Patentinhaber: VOLKSWAGEN AKTIENGESELLSCHAFT, 38440 Wolfsburg (DE)
(72) Erfinder: HUWER, Wojciech, 38110 Braunschweig (DE)
(86) Internationale Anmeldenummer: PCT/EP2019/083025
(87) Internationale Veröffentlichungsnummer: WO 2020/120163

(56) Entgegenhaltungen:
- DE-A1-102014 204 788
- DE-A1-102015 216 714
- US-A1- 2012 113 009

## Beschreibung

Die Erfindung betrifft ein Bediensystem für ein Fahrzeug gemäß dem Oberbegriff des Patentanspruchs 1, ein Verfahren zum Betrieb eines Bediensystems für ein Fahrzeug gemäß dem Oberbegriff des Patentanspruchs 6 und ein Fahrzeug gemäß dem Oberbegriff des Patentanspruchs 10.

Im Fahrzeugbereich, beispielsweise bei Kraftfahrzeugen, sind unterschiedliche Lösungen bekannt, um Bedienelemente zu realisieren. Dabei kommen auch berührungssensitive Bedienelemente zum Einsatz. Diese werden durch Berührung oder Annäherung eines Bedieners bedient. Solche berührungssensitiven Bedienelemente können auch mit Anzeigefunktionen ausgestattet sein, beispielsweise bei Touchdisplays. In der Regel stellen berührungssensitive Bedienfelder dabei mehrere berührungssensitive Bedienelemente bereit, mit denen unterschiedliche Funktionen beispielsweise des Fahrzeugs bedienbar sind. Funktionen im Bereich Information, Entertainment, Komfort oder auch Lichtfunktionen des Fahrzeugs seien dabei rein exemplarisch genannt.

Bei berührungssensitiven Bedienelementen kann es, insbesondere während der Fahrt, zu einer ungewollten Bedienung eines Bedienelements kommen. Gründe hierfür sind zum einen Erschütterungen und zum anderen die oft räumliche Nähe der Bedienelemente. Möchte der Bediener beispielsweise die Hand bei der Bedienung eines Bedienelements ablegen, kann so ungewollt auch ein anderes Bedienelement betätigt werden.

DE 10 2014 204 788 A1 offenbart ein Touchscreen-Display, das eine Mehrzahl berührungssensitiver Bedienelemente aufweist.

Der Erfindung liegt nun die Aufgabe zugrunde, eine technische Lösung bereitzustellen, mit der eine ungewollte Bedienung einfach und sicher vermieden wird.

Die Aufgabe wird durch die Gegenstände der unabhängigen Patentansprüche 1, 6 und 10 gelöst. Weitere bevorzugte Ausgestaltungen der Erfindung ergeben sich aus den übrigen, in den Unteransprüchen genannten Merkmalen.

Ein erster Aspekt der Erfindung betrifft ein Bediensystem für ein Fahrzeug, umfassend eine Mehrzahl berührungssensitiver Bedienelemente, die jeweils ausgebildet sind ein Statussignal zu erzeugen und in dem die Bedienelemente untereinander über eine diskrete elektrische Schnittstelle wirkverbunden und ausgebildet sind, ihr Statussignal über die diskrete elektrische Schnittstelle an die anderen Bedienelemente zu übermitteln, wobei im Falle einer Berührung wenigstens eines Bedienelements durch einen Bediener ein damit korrespondierendes Statussignal erzeugbar ist und wenigstens ein anderes Bedienelement ausgebildet ist, infolge des korrespondierenden Statussignals in einen Sperrzustand überzugehen.

Dies bietet den Vorteil, dass bei Bedienung eines Bedienelements eine ungewollte Berührung oder Annährung eines anderen Bedienelements nicht dazu führt, dass eine mit dem anderen Bedienelement steuerbare Funktion ungewollt ausgelöst wird. Somit werden die Bediensicherheit und der Komfort vorteilhaft erhöht.

Diskrete elektrische Schnittstellen übernehmen im Gegensatz zu integrierten Schnittstellen nur eine bestimmte Funktion und können diese daher vorteilhaft schnell und einfach erfüllen. Da beim Bediensystem der Erfindung die Bedienelemente selbst untereinander in dieser Weise wirkverbunden sind, wobei die Wirkverbindung vorzugsweise hardwareseitig realisiert ist, vorzugsweise spannungsgesteuert, kann der beschriebene Übergang in den Sperrzustand unmittelbar erfolgen. Die hardwareseitige Realisierung reagiert dabei besonders schnell. Es ist aber auch möglich, dass die Bedienelemente selbst jeweils mit einer entsprechenden Steuerungssoftware ausgestattet sind. Im Gegensatz zu anderen technischen Lösungen zur Herstellung der Wirkverbindung, rein exemplarisch durch eine Realisierung in einem Steuergerät, mit dem die Bedienelemente über ein Bussystem gekoppelt sind, ist der Übergang in den Sperrzustand nicht von vorgegebenen Laufzeiten, Kommunikationsfenstern des Bussystems oder dergleichen abhängig.

Somit kann der Sperrzustand besonders schnell erzeugt werden und die Bediensicherheit und der Komfort sind besonders signifikant erhöht.

Als Sperrzustand wird allgemein ein Zustand bezeichnet, in dem eine Berührung oder Annäherung des jeweiligen Bedienelements durch den Bediener keine Auslösung einer dem Bedienelement zugeordneten Funktion hervorruft. Von einem Übergehen in den Sperrzustand wird auch dann gesprochen, wenn der Sperrzustand bereits vorliegt und aufgrund des korrespondierenden Statussignals beibehalten wird. Von einer Berührung durch den Bediener wird bereits dann gesprochen, wenn dieser sich hinreichend dem Bedienelement annähert, so dass das Bedienelement reagiert.

In bevorzugter Ausgestaltung des Bediensystems der Erfindung ist vorgesehen, dass im Falle einer Berührung wenigstens eines Bedienelements durch einen Bediener alle anderen Bedienelemente ausgebildet sind, in einen Sperrzustand übergehen.

Die Bediensicherheit des Bediensystems ist so besonders groß. Dies bietet sich insbesondere dann an, wenn alle Bedienelemente derart nah beieinander angeordnet sind, dass die Bedienung eines der Bedienelemente die Gefahr birgt, dass mehrere andere Bedienelemente ungewollt bedient werden.

In weiterhin bevorzugter Ausgestaltung des Bediensystems der Erfindung ist vorgesehen, dass sowohl das wenigstens eine Bedienelement, als auch das wenigstens eine andere Bedienelement ausgebildet sind, das korrespondierende Statussignal zu senden oder das korrespondierende Statussignal zu empfangen und in den Sperrzustand überzugehen.

Mit anderen Worten kann die Steuerung des Sperrzustands der Bedienelemente untereinander sowohl unidirektional, als auch bidirektional erfolgen.

Dies trägt zu einer weiteren Erhöhung der Bediensicherheit bei. Bei gleichzeitiger Berührung mehrerer Bedienelemente können vorzugsweise alle Bedienelemente in den Sperrzustand übergehen oder auch eine Priorisierung hinterlegt sein. Da eine exakt gleichzeitige Berührung praktisch kaum möglich ist, wird der Fachmann anhand der hier offenbarten Lehre aber in die Lage versetzt, Zeitabstände zwischen der Bedienung mehrerer Bedienelemente festzulegen, die praktisch als gleichzeitig angesehen werden können. Die Priorisierung oder auch die Zeitabstände können auch hardwareseitig realisiert werden.

In weiterhin bevorzugter Ausgestaltung des Bediensystems der Erfindung ist vorgesehen, dass die Bedienelemente unmittelbar nebeneinander angeordnet sind. So können das wenigstens eine Bedienelement und das wenigstens eine andere Bedienelement oder auch alle Bedienelemente unmittelbar nebeneinander angeordnet sein.

"Unmittelbar" ist dabei dahingehend zu verstehen, dass die Bedienelemente auf Grund ihrer räumlichen Nähe der Gefahr einer ungewollten Bedienung unterliegen. Dies kann beispielsweise der Fall sein, wenn sie in einem gemeinsamen Bedienbereich angeordnet sind, beispielsweise einer Mittelkonsole eines Fahrzeugs, weiterhin beispielsweise in Form von Bedienleisten oder Bedienfeldern. Vorzugsweise wird zur Ableitung eines benennbaren Abstands, ein Abstand gewählt, der im Bereich der Länge einer durchschnittlichen menschlichen Hand oder darunter liegt. Ebenfalls vorzugsweise kann der Abstand bis zu 250 mm betragen oder darunter liegen.

In weiterhin bevorzugter Ausgestaltung des Bediensystems der Erfindung ist vorgesehen, dass die diskrete elektrische Schnittstelle eine Peer-to-Peer-Leitung umfasst.

Somit kann der Fachmann auf eine an sich bekannte Architektur zurückgreifen, im Kontext der hierin offenbarten neuen Integration in das erfindungsgemäße Bediensystem. Die Peer-to-Peer-Leitung kann spannungs- oder stromgeregelt sein.

Ein weiterer Aspekt der Erfindung betrifft ein Verfahren zum Betrieb eines Bediensystems für ein Fahrzeug, wobei das betriebene Bediensystem eine Mehrzahl berührungssensitiver Bedienelemente umfasst und das Verfahren folgende Schritte umfasst:
- Berührung wenigstens eines Bedienelements durch einen Bediener;
- Erzeugung eines mit der Berührung korrespondierenden Statussignals;
- Übermittlung des korrespondierenden Statussignals durch das berührte Bedienelement an die anderen Bedienelemente über eine diskrete elektrische Schnittstelle;
- Übergang wenigstens eines anderen Bedienelements in einen Sperrzustand, infolge des korrespondierenden Statussignals.

Bei dem in dem Verfahren betriebenen Bediensystem kann es sich insbesondere um ein erfindungsgemäßes Bediensystem gemäß der vorhergehenden Beschreibung handeln. Die in Bezug auf das Bediensystem der Erfindung offenbarte technische Lehre ist somit auf das Verfahren der Erfindung übertragbar, sowie umgekehrt.

In bevorzugter Ausgestaltung des Verfahrens der Erfindung ist vorgesehen, dass alle anderen Bedienelemente infolge des korrespondierenden Statussignals in den Sperrzustand übergehen.

In weiterhin bevorzugter Ausgestaltung des Verfahrens der Erfindung ist vorgesehen, dass die Berührung des wenigstens einen Bedienelements endet und ein damit korrespondierendes Statussignal erzeugt wird und durch das wenigstens eine zuvor berührte Bedienelement an die anderen Bedienelemente übermittelt wird und daraufhin das wenigstens eine andere Bedienelement, das sich zuvor im Sperrzustand befunden hat, in einen funktionalen Zustand übergeht und dann das andere Bedienelement, das sich zuvor im Sperrzustand befunden hat, durch den Bediener berührt wird und das mit der Berührung korrespondierenden Statussignal erzeugt und an die anderen Bedienelemente übermittelt und dann wenigstens das zuvor berührte Bedienelement infolge des mit der Berührung korrespondierenden Statussignals in den Sperrzustand übergeht.

Auf diese Weise kann eine Steuerung des Sperrzustands der Bedienelemente untereinander auch bidirektional erfolgen, was das Verfahren der Erfindung sehr flexibel und dabei sicher für unterschiedliche Bediensituationen macht.

In bevorzugter Ausgestaltung des Verfahrens der Erfindung ist vorgesehen, dass das Bediensystem in einem Fahrzeug betrieben wird.

Somit wird in dem erfindungsgemäßen Verfahren ein hohes Maß an Fahrkomfort und Sicherheit erreicht.

Ein weiterer Aspekt der Erfindung betrifft ein Fahrzeug, umfassend ein Bediensystem gemäß der vorhergehenden Beschreibung. Auch kann das erfindungsgemäße Fahrzeug vorzugsweise in einem erfindungsgemäßen Verfahren gemäß der vorhergehenden Beschreibung verwendet werden. Die in Bezug auf das Bediensystem und das Verfahren der Erfindung offenbarte technische Lehre ist somit auf das erfindungsgemäße Fahrzeug übertragbar, sowie umgekehrt.

Vorzugsweise kann es sich bei dem Fahrzeug der Erfindung um ein Kraftfahrzeug handeln.

Mit nochmals anderen Worten zusammengefasst, betrifft die Erfindung ein System umfassend mehrere touchsensitive Bedienelemente, welche nebeneinander angeordnet sind. Durch eine spannungsgeregelte Peer-to Peer-Leitung können die Bedienelemente miteinander kommunizieren und bestimmen, wann ein jeweiliges Bedienelement aktiv auf Berührungen hören soll oder deaktiviert ist.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: anhand von Signalpegeln, einen schematischen Ablauf eines erfindungsgemäßen Verfahrens zum Betrieb eines erfindungsgemäßen Bediensystems in einer Ausführungsform;
- Figur 2: eine Tabelle exemplarischer Signalpegel für das erfindungsgemäße Verfahren aus Figur 1;
- Figur 3: ein erfindungsgemäßes Fahrzeug in einer Ausführungsform.

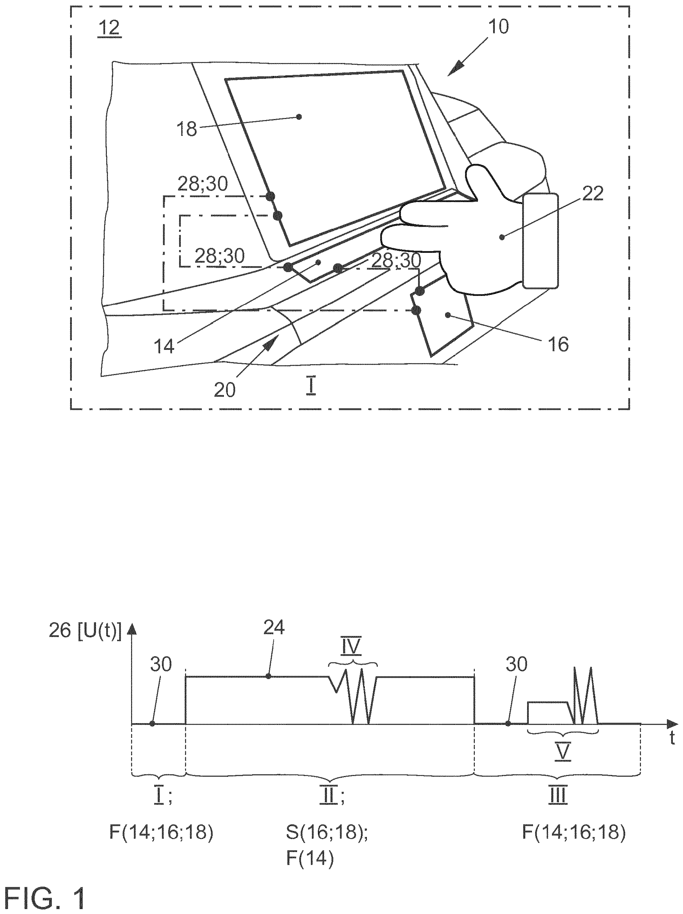

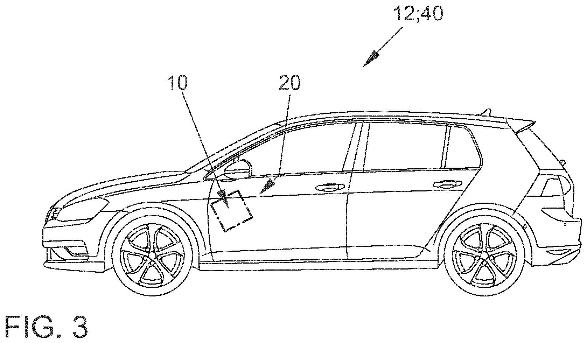

Figur 1 zeigt im oberen Teil ein erfindungsgemäßes Bediensystem 10, das Teil eines hier nicht weiter dargestellten erfindungsgemäßen Fahrzeugs 12 ist (vergleiche Figur 3).

Das Bediensystem 10 umfasst vorliegend drei berührungssensitive Bedienelemente 14, 16, 18. Mit den Bedienelementen 14, 16, 18 sind verschiedene Funktionen des Fahrzeugs 12 bedienbar. Exemplarisch sind die Bedienelemente 14, 16, 18 in einer Mittelkonsole 20 des Fahrzeugs 12 integriert.

Die Bedienung erfolgt durch Berührung oder Annäherung eines Bedieners 22, symbolisiert durch eine Hand, woraufhin ein berührtes Bedienelement eine ihm zugeordnete Funktion des Fahrzeugs 12 auslöst.

Es ist ersichtlich, dass die Bedienelemente 14, 16, 18 unmittelbar nebeneinander angeordnet sind. Daher kann es ungewollt passieren, dass der Bediener 22, wenn er rein exemplarisch, wie gezeigt, das Bedienelement 14 bedienen will, mit der Hand auch das Bedienelement 16 berührt.

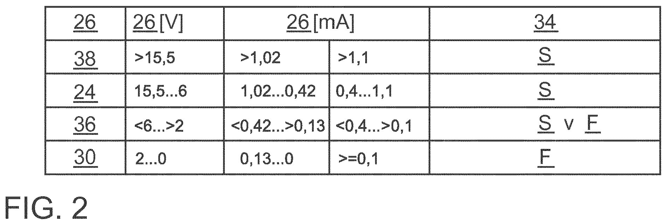

Erfolgt beispielsweise die Berührung des Bedienelements 14 durch den Bediener 22, so erzeugt das Bedienelement 14 ein mit der Berührung korrespondierendes Statussignal 24 (vergleiche Figur 2). Das mit der Berührung korrespondierende Statussignal 24 kann beispielsweise einen Signalpegel 26 mit einem hohen Wert aufweisen. Dabei kann es sich um ein Spannungs- oder Stromsignal handeln.

Der Signalpegel 26 ist in einem Diagramm im unteren Teil der Figur 1 exemplarisch als Spannungssignal über die Zeit t aufgetragen.

Im Abschnitt I des Diagramms ist erkennbar, dass der Signalpegel 26 vor der Berührung einen geringen Wert aufweist, der einem Statussignal 30 entspricht, das mit einem berührungsfreien Zustand des Bedienelements 14 korrespondiert. In diesem Abschnitt I befinden sich die Bedienelemente 14, 16, 18 in einem funktionalen Zustand F, in dem eine Berührung die den Bedienelementen 14, 16, 18 zugeordnete Funktion des Fahrzeugs 12 auslösen kann.

Im Moment der Berührung des Bedienelements 14 steigt der Signalpegel 26 auf den hohen Wert an, der dem mit der Berührung korrespondierenden Statussignal 24 entspricht. Dies ist in Abschnitt II des Diagramms angedeutet.

Das mit der Berührung korrespondierende Statussignal 24 wird über eine schematisch angedeutete diskrete elektrische Schnittstelle 28 (vergleiche oberer Teil der Figur 1) durch das berührte Bedienelement 14 an die anderen Bedienelemente 16, 18 übermittelt.

In der Folge gehen die Bedienelemente 16 und 18 in einen Sperrzustand S über. Im Sperrzustand S führt selbst eine Berührung eines im Sperrzustand S befindlichen Bedienelements, in Abschnitt II also der Bedienelemente 16, 18, nicht zu einer Auslösung der den im Sperrzustand S befindlichen Bedienelemente zugeordneten Funktionen des Fahrzeugs 12. Wenn, wie oben angesprochen, der Bediener 22 bei der Bedienung des Bedienelements 14 also ungewollt auch beispielsweis das Bedienelement 16 berührt, wird dieses nicht reagieren.

In Abschnitt III des Diagramms ist angedeutet, dass die Berührung des Bedienelements 14 endet, beispielsweise da der Bediener 22 seine Eingabe abgeschlossen hat. Es wird daher wieder das Statussignal 30 erzeugt, das mit einem berührungsfreien Zustand des Bedienelements 14 korrespondiert. Dieses wird wieder durch das zuvor berührte Bedienelement 14 wieder die anderen Bedienelemente 16, 18 übermittelt, die sich zuvor im Sperrzustand S befunden haben und die darauf hin wieder in den funktionalen Zustand F übergehen.

Das Verfahren kann sich analog zu den Abschnitten I bis III fortsetzen, wobei nun in analoger Weise beispielsweise eines der Bedienelemente 16 und 18 durch den Bediener 22 berührt wird und das mit der Berührung korrespondierende Statussignal 24 erzeugt. Dieses wird dann in analoger Weise an die anderen Bedienelemente, also das Bedienelement 14 und eines der Bedienelemente 16 oder 18, nämlich jenes welches ebenfalls nicht berührt wird, übermittelt. In analoger Weise geht dann auch das beim vorherigen Durchlauf der Abschnitte I bis III berührte Bedienelement 14 in den Sperrzustand S über.

In den Abschnitten IV und V des Diagramms sind Maßnahmen zur Stabilisierung des Betriebs des Bediensystems 10 gezeigt. So ist exemplarisch vorgesehen, dass sehr kurzfristige Schwankungen in dem Signalpegel 26 von den empfangenden Bedienelementen nicht sofort als Wechsel von dem mit der Berührung korrespondierenden Statussignal 24 hin zu dem mit dem berührungsfreien Zustand des Bedienelements 14 korrespondierenden Statussignal 30 interpretiert werden. Entsprechend wird vermieden, dass die empfangenden Bedienelemente, hier wiederum exemplarisch die Bedienelemente 16 und 18, in den Abschnitten IV und V zwischen dem Sperrzustand S und dem funktionalen Zustand F hin- und herspringen. Die Länge der Abschnitte IV und V vermag der Fachmann anhand der in dieser Anmeldung offenbarten Lehre zweckmäßig auszugestalten.

Die Übermittlung des Signalpegels 26 zwischen den Bedienelementen 14, 16, 18 erfolgt vorliegend über eine Peer-to-Peer-Leitung 32, welche von der diskreten elektrischen Schnittstelle 28 umfasst ist. Dem Fachmann sind elektrische Schaltungen, umfassend beispielsweise Logikschaltungen und Filter, bekannt, mit denen die beschriebenen Abläufe auch rein hardwareseitig ermöglicht werden.

Figur 2 zeigt eine Tabelle exemplarischer Signalpegel 26, wie sie in dem erfindungsgemäßen Verfahren aus Figur 1 verwendet werden.

Der Signalpegel 26 des sendenden Bedienelements kann demnach einen hohen Wert annehmen, wie in der Tabelle beispielsweise in Volt und Milliampere gezeigt und so das mit der Berührung korrespondierende Statussignal 24 bilden. Eine Reaktion 34 der empfangenden Bedienelemente lautet dabei "Sperrzustand S".

Der Signalpegel 26 des sendenden Bedienelements kann auch einen niedrigen Wert annehmen, wie in der Tabelle beispielsweise in Volt und Milliampere gezeigt und so das Statussignal 30 bilden, das mit einem berührungsfreien Zustand des sendenden Bedienelements korrespondiert. Eine Reaktion 34 der empfangenden Bedienelemente lautet dabei "funktionaler Zustand F".

In Fällen, in denen der Signalpegel 26 des sendenden Bedienelements einen Wert zwischen dem hohen und dem niedrigen Wert annimmt, kann beispielsweise ein geschätztes Statussignal 36 des sendenden Bedienelements angenommen werden, der jenem Statussignal 24 oder 30 entspricht, der dem zuletzt bekannten eindeutigen Signalpegel 26 des sendenden Bedienelements entspricht, also aus dem davor vorliegenden hohen oder niedrigen Wert abgeleitet werden. Im Falle des Statussignals 36 wird anhand dieser Logik, die auch rein hardwareseitig implementiert sein kann, also entschieden, das das Statussignal 24 oder aber 30 vorliegt, je nachdem, welches der Statussignale 24, 30 zuvor bestand. Entsprechend lautet eine Reaktion 34 der empfangenden Bedienelemente dabei "funktionaler Zustand F", wenn das sendende Bedienelement zuvor das Statussignal 30 gesendet hat oder "Sperrzustand S" wenn das sendende Bedienelement zuvor das Statussignal 24 gesendet hat.

Der Signalpegel 26 des sendenden Bedienelements kann beispielsweise in Fehlerfällen auch einen Wert annehmen, der oberhalb des hohen Werts liegt und so beispielsweise ein Fehlersignal 38 bilden. Eine Reaktion 34 der empfangenden Bedienelemente oder auch aller Bedienelemente 14, 16, 18 kann in einem solchen Fehlerfall beispielsweise lauten "Sperrzustand S". Der Fachmann wird für solche Fehlerfälle geeignete Maßnahmen vorsehen, wie beispielsweise einen Reset des Bediensystems 10. Auch solche Maßnahmen können rein hardwareseitig realisiert werden.

Figur 3 zeigt ein erfindungsgemäßes Fahrzeug 12, bei dem es sich vorliegend um ein Kraftfahrzeug 40 handelt.

Das Kraftfahrzeug 40 umfasst ein erfindungsgemäßes Bediensystem 10, wie beispielsweise in Figur 1 beschrieben.

Das Bediensystem 10 ist exemplarisch in einer Mittelkonsole 20 des Kraftfahrzeugs 40 integriert.

### Bezugszeichenliste

- 10: Bediensystem
- 12: Fahrzeug
- 14: Bedienelement
- 16: Bedienelement
- 18: Bedienelement
- 20: Mittelkonsole
- 22: Bediener
- 24: mit einer Berührung korrespondierendes Statussignal
- 26: Signalpegel
- 28: diskrete elektrische Schnittstelle
- 30: Statussignal, das mit einem berührungsfreien Zustand korrespondiert
- 32: Peer-to-Peer-Leitung
- 34: Reaktion
- 36: geschätztes Statussignal
- 38: Fehlersignal
- 40: Kraftfahrzeug

- F: funktionaler Zustand
- S: Sperrzustand
- t: Zeit
- U(t): Spannungssignal
- I: Abschnitt
- II: Abschnitt
- III: Abschnitt
- IV: Abschnitt
- V: Abschnitt

## Patentansprüche

1. Bediensystem (10) für ein Fahrzeug (12), umfassend eine Mehrzahl berührungssensitiver Bedienelemente (14, 16, 18), die jeweils ausgebildet sind, ein Statussignal (24, 30, 36) zu erzeugen, **dadurch gekennzeichnet, dass** die Bedienelemente (14, 16, 18) untereinander über eine diskrete elektrische Schnittstelle (28) wirkverbunden sind und ausgebildet sind, ihr Statussignal (24, 30, 36) über die diskrete elektrische Schnittstelle (28) an die anderen Bedienelemente (14, 16, 18) zu übermitteln, wobei im Falle einer Berührung wenigstens eines Bedienelements (14) durch einen Bediener (22) ein damit korrespondierendes Statussignal (24) erzeugbar ist und wenigstens ein anderes Bedienelement (16, 18) ausgebildet ist, infolge des korrespondierenden Statussignals (24) in einen Sperrzustand (S) überzugehen.

2. Bediensystem (10) nach Anspruch 1, **dadurch gekennzeichnet, dass** im Falle einer Berührung wenigstens eines Bedienelements (14) durch einen Bediener (22) alle anderen Bedienelemente (16, 18) ausgebildet sind, in einen Sperrzustand (S) übergehen.

3. Bediensystem (10) nach einem der vorhergehenden Ansprüche, **dadurch gekennzeichnet, dass** sowohl das wenigstens eine Bedienelement (14), als auch das wenigstens eine andere Bedienelement (16, 18) ausgebildet sind, das korrespondierende Statussignal (24) zu senden oder das korrespondierende Statussignal (24) zu empfangen und in den Sperrzustand (S) überzugehen.

4. Bediensystem (10) nach einem der vorhergehenden Ansprüche, **dadurch gekennzeichnet, dass** die Bedienelemente (14, 16, 18) unmittelbar nebeneinander angeordnet sind.

5. Bediensystem (10) nach einem der vorhergehenden Ansprüche, **dadurch gekennzeichnet, dass** die diskrete elektrische Schnittstelle (28) eine Peer-to-Peer-Leitung 32) umfasst.

6. Verfahren zum Betrieb eines Bediensystems (10) für ein Fahrzeug (12), wobei das betriebene Bediensystem (10) eine Mehrzahl berührungssensitiver Bedienelemente (14, 16, 18) umfasst und das Verfahren folgende Schritte umfasst:
- Berührung wenigstens eines Bedienelements (14) durch einen Bediener (22);
- Erzeugung eines mit der Berührung korrespondierenden Statussignals (24), **gekennzeichnet durch**,
- Übermittlung des korrespondierenden Statussignals (24) durch das berührte Bedienelement (14) an die anderen Bedienelemente (16, 18) über eine diskrete elektrische Schnittstelle (28);
- Übergang wenigstens eines anderen Bedienelements (16, 18) in einen Sperrzustand (S), infolge des korrespondierenden Statussignals (24).

7. Verfahren nach Anspruch 6, **dadurch gekennzeichnet, dass** alle anderen Bedienelemente (16, 18) infolge des korrespondierenden Statussignals (24) in den Sperrzustand (S) übergehen.

8. Verfahren nach Anspruch 6 oder 7, **dadurch gekennzeichnet, dass** die Berührung des wenigstens einen Bedienelements (14) endet und ein damit korrespondierendes Statussignal (30) erzeugt wird und durch das wenigstens eine zuvor berührte Bedienelement (14) an die anderen Bedienelemente (16, 18) übermittelt wird und daraufhin das wenigstens eine andere Bedienelement (16, 18), das sich zuvor im Sperrzustand (S) befunden hat, in einen funktionalen Zustand (F) übergeht und dann das andere Bedienelement (16, 18), das sich zuvor im Sperrzustand (S) befunden hat, durch den Bediener (22) berührt wird und das mit der Berührung korrespondierende Statussignal (24) erzeugt und an die anderen Bedienelemente (14, 16/14, 18) übermittelt und dann wenigstens das zuvor berührte Bedienelement (14) infolge des mit der Berührung korrespondierenden Statussignals (24) in den Sperrzustand (S) übergeht.

9. Verfahren nach einem der Ansprüche 6 bis 8, **dadurch gekennzeichnet, dass** das Bediensystem (10) in einem Fahrzeug (12) betrieben wird.

10. Fahrzeug (12), umfassend ein Bediensystem (10) nach einem der Ansprüche 1 bis 5.

## Claims

1. Operating system (10) for a vehicle (12), comprising a plurality of touch-sensitive control elements (14, 16, 18), each of which is designed to generate a status signal (24, 30, 36), **characterized in that** the control elements (14, 16, 18) are operatively connected to one another via a discrete electrical interface (28) and are designed to transmit their status signal (24, 30, 36) via the discrete electrical interface (28) to the other control elements (14, 16, 18), wherein, if an operator (22) touches at least one control element (14), a status signal (24) corresponding thereto can be generated, and at least one other control element (16, 18) is designed to transition into a blocked state (S) as a result of the corresponding status signal (24).

2. Operating system (10) according to claim 1, **characterized in that,** if an operator (22) touches at least one control element (14), all the other control elements (16, 18) are designed to transition into a blocked state (S).

3. Operating system (10) according to one of the preceding claims, **characterized in that** both the at least one control element (14) and the at least one other control element (16, 18) are designed to send the corresponding status signal (24) or to receive the corresponding status signal (24), and to transition into the blocked state (S).

4. Operating system (10) according to one of the preceding claims, **characterized in that** the control elements (14, 16, 18) are arranged directly next to each other.

5. Operating system (10) according to one of the preceding claims, **characterized in that** the discrete electrical interface (28) comprises a peer-to-peer line (32).

6. Method for operating an operating system (10) for a vehicle (12), wherein the operated operating system (10) comprises a plurality of touch-sensitive control elements (14, 16, 18), and the method comprises the following steps:
- touching at least one control element (14) by an operator (22);
- generating a status signal (24) corresponding to the touch,
**characterized by**
- transmission of the corresponding status signal (24) by the touched control element (14) to the other control elements (16, 18) via a discrete electrical interface (28);
- transition of at least one other control element (16, 18) into a blocked state (S) as a result of the corresponding status signal (24).

7. Method according to claim 6, **characterized in that** all the other control elements (16, 18) transition into the blocked state (S) as a result of the corresponding status signal (24).

8. Method according to claim 6 or 7, **characterized in that** the touching of the at least one control element (14) ends, and a status signal (30) corresponding thereto is generated and transmitted by the at least one previously-touched control element (14) to the other control elements (16, 18), and, then, the at least one other control element (16, 18), which was previously in the blocked state (S), transitions into a functional state (F), and, then, the other control element (16, 18), which was previously in the blocked state (S), is touched by the operator (22) and generates the status signal (24) corresponding to the touch and transmits said status signal to the other control elements (14, 16/14, 18), and, then, at least the previously-touched control element (14) transitions into the blocked state (S) as a result of the status signal (24) corresponding to the touch.

9. Method according to one of claims 6 through 8, **characterized in that** the operating system (10) is operated in a vehicle (12).

10. Vehicle (12), comprising an operating system (10) according to one of claims 1 through 5.

## Revendications

1. Système de commande (10) pour un véhicule (12), comprenant une pluralité d'éléments de commande (14, 16, 18) tactiles, qui sont respectivement conçus pour produire un signal d'état (24, 30, 36), **caractérisé en ce que** les éléments de commande (14, 16, 18) sont en liaison active les uns avec les autres par l'intermédiaire d'une interface électrique discrète (28) et sont conçus pour transmettre leur signal d'état (24, 30, 36) par l'intermédiaire de l'interface électrique discrète (28) aux autres éléments de commande (14, 16, 18), dans lequel, en cas de contact avec au moins un élément de commande (14) par un utilisateur (22), un signal d'état (24) lui correspondant peut être produit et au moins un autre élément de commande (16, 18) est conçu pour, à la suite du signal d'état (24) correspondant, passer dans un état de blocage (S).

2. Système de commande (10) selon la revendication 1, **caractérisé en ce que,** en cas de contact d'au moins un élément de commande (14) par un utilisateur (22), tous les autres éléments de commande (16, 18) sont conçus pour passer dans un état de blocage (S).

3. Système de commande (10) selon l'une quelconque des revendications précédentes, **caractérisé en ce que,** aussi bien l'au moins un élément de commande (14) que l'au moins un autre élément de commande (16, 18) sont conçus pour envoyer le signal d'état (24) correspondant ou pour recevoir le signal d'état (24) correspondant et pour passer dans l'état de blocage (S).

4. Système de commande (10) selon l'une quelconque des revendications précédentes, **caractérisé en ce que** les éléments de commande (14, 16, 18) sont disposés directement les uns à côté des autres.

5. Système de commande (10) selon l'une quelconque des revendications précédentes, **caractérisé en ce que** l'interface électrique discrète (28) comprend une ligne de pair à pair 32).

6. Procédé de fonctionnement d'un système de commande (10) pour un véhicule (12), dans lequel le système de commande (10) actionné comprend une pluralité d'éléments de commande (14, 16, 18) tactiles et le procédé comprend les étapes suivantes :
- contact avec au moins un élément de commande (14) par un utilisateur (22) ;
- production d'un signal d'état (24) correspondant au contact,
**caractérisé par**
- la transmission du signal d'état (24) correspondant par l'élément de commande (14) touché aux autres éléments de commande (16, 18) par l'intermédiaire d'une interface électrique discrète (28) ;
- le passage d'au moins un autre élément de commande (16, 18) dans un état de blocage (S), à la suite du signal d'état (24) correspondant.

7. Procédé selon la revendication 6, **caractérisé en ce que** tous les autres éléments de commande (16, 18) passent dans l'état de blocage (S) à la suite du signal d'état (24) correspondant.

8. Procédé selon la revendication 6 ou 7, **caractérisé en ce que** le contact de l'au moins un élément de commande (14) se termine et un signal d'état (30) correspondant à cela est produit et est transmis par l'au moins un élément de commande (14) touché auparavant aux autres éléments de commande (16, 18) et, de ce fait, l'au moins un autre élément de commande (16, 18), qui s'est trouvé auparavant dans l'état de blocage (S), passe dans un état fonctionnel (F) et ensuite l'autre élément de commande (16, 18), qui s'est trouvé auparavant dans l'état de blocage (S), est touché par l'utilisateur (22) et le signal d'état (24) correspondant au contact est produit et transmis aux autres éléments de commande (14, 16/14, 18) et ensuite au moins l'élément de commande (14) touché auparavant, à la suite du signal d'état (24) correspondant au contact, passe dans l'état de blocage (S).

9. Procédé selon l'une quelconque des revendications 6 à 8, **caractérisé en ce que** le système de commande (10) est utilisé dans un véhicule (12).

10. Véhicule (12) comprenant un système de commande (10) selon l'une quelconque des revendications 1 à 5.
